# EUROPEAN PATENT APPLICATION

(11) **EP 1 715 012 A1**
(43) Date of publication of application: **25.10.2006**
(21) Application number: 06251972.3
(22) Date of filing: 07.04.2006
(51) Int. Cl.: C09D 11/00, C09D 17/00

(54) **Colorants, dispersions, dispersants and inks**

(30) Priority: 22.04.2005 US 674022
(71) Applicant: Rohm and Haas Company, Philadelphia, PA 19106-2399 (US)
(72) Inventor: Madle, Thomas Glenn, Flourtown, Pennsylvania 19031 (US); Thompson, Marlon, Philadelphia, Pennsylvania 19130 (US); VanDyk, Antony Keith, Blue Bell, Pennsylvania 19422 (US)
(74) Representative: Kent, Venetia Katherine

(57) **Abstract**

Colorant, dispersants, dispersions, and inks are provided which include PNPs having a mean diameter in the range of from 1 to 20 nanometers, and a second polymeric component comprising certain hydrophilic and hydrophobic groups. Also provided are methods for preparing colorants, dispersants, dispersions, and inks which include PNPs and a second polymeric component comprising certain hydrophilic and hydrophobic groups.

## Description

This invention relates to colorants, dispersants, dispersions, and inks. In particular, this invention relates to a colorant, dispersant, dispersion, and ink including a combination of crosslinked polymeric nanoparticles (hereinafter "PNPs") having a mean diameter in the range of from 1 to 20 nanometers and a second polymeric component comprising certain hydrophilic and hydrophobic groups. This invention also relates to methods for preparing colorants, dispersants, dispersions, and inks.

Many types of colorants can be dispersed in liquids including organic and inorganic pigment particles and dyes. However, many colorants, such as organic pigments, are often provided as large (e.g., greater than 100 micron) powdery agglomerates of aggregates of primary pigment particles. Unfortunately, the color quality of materials incorporating dispersions of large powdery colorant agglomerates is often poor. Accordingly, many colorants require the extensive input of energy, e.g., through grinding and milling, and require the use of specific dispersants to prepare dispersions of smaller colorant particles, such as primary pigment particles, for use in materials having improved color quality. While dyes are generally more dispersible than pigments, many dyes tend to fade on exposure to heat, light, and radiation (poor light fastness). Many dyes also tend to migrate (i.e., "bleed"). While organic pigments typically have better light fastness and migrate less compared to dyes, they typically are difficult to disperse as described above. Improved colorants are sought.

Particle dispersions are inherently unstable. Particle dispersions tend to require an effective dispersant to prevent the particles from coagulating. Examples of suitable dispersants are anionic, cationic, and nonionic surfactants and polymeric dispersants. Surfactants as dispersants suffer from having dynamic mobility between the particle surface and the continuous phase, which can result in irreversible coagulation upon the approach of two particles. Their effectiveness as dispersants can also be adversely affected by the presence of water miscible organic solvents present in the dispersion. Polymeric dispersants attach to the particle surface at multiple points so that they are not susceptible to some of the failure modes of surfactants. They also can stabilize by both charge and steric stabilization. However, even polymeric dispersants can be adversely affected by the presence of various organic additives, which can cause collapse of the stabilizing polymer chains or desorption of the polymeric dispersant from the particle surface. Improved dispersants and dispersions are sought.

In formulating inks, particularly ink jet inks, it is desirable to include various water miscible co-solvents, surfactants, humectants, water soluble polymers, and the like in order to maximize optical and physical properties of the resultant printed image. The combined effect of these various ink formulation additives is found to destabilize otherwise stable colorant dispersions.

International patent application WO2003014237 discloses copolymer dispersants comprising a hydrophilic segment and a hydrophobic segment where the hydrophilic segment is preferably a methacrylic acid polymer or copolymer thereof with another monomer, such as styrene sulfonic acid, and where the hydrophobic segment is preferably a polymer or copolymer containing electron rich functional groups comprised of a plurality of methacrylate derivatized monomers. Also disclosed is a polymer comprising a monomeric hydrophobic head and a polymeric tail, where preferably the monomeric hydrophobic head is (ethylene glycol) 2,4,6-tris-(1-phenylethyl)phenyl ether. While these dispersants are adequate for some pigments in certain ink formulations, there is a need for greater stability to allow the use of a wider range of pigments and ink formulations.

European patent applications EP1245644 and EP1371688 disclose the use of PNPs to produce improved colorants and inks. While these improvements are beneficial for some pigments in certain ink formulations, there is a need for greater stability to allow the use of a wider range of pigments and ink formulations.

The problem addressed by the present invention is to provide dispersants for colored dispersions which impart stability across a wide spectrum of colorants and ink formulations.

The present invention provides a dispersion of colored particles comprising: (a) one or more pigments; (b) crosslinked polymeric nanoparticles ("PNPs") having a mean diameter in the range of from 1 to 20 nanometers, said PNPs comprising as polymerized units at least one multi-ethylenically-unsaturated monomer; and (c) a second polymer comprising, as polymerized units, a hydrophobic monomer unit with a polycyclic or polyaromatic terminal unit, attached with a hydrophilic spacer unit, to a backbone group comprising (meth)acrylate units. The present invention further provides an inkjet ink comprising: (a) a liquid medium and (b) a dispersion of colored particles comprising (i) one or more pigments, (ii) crosslinked polymeric nanoparticles ("PNPs") having a mean diameter in the range of from 1 to 20 nanometers, said PNPs comprising as polymerized units at least one multi-ethylenically-unsaturated monomer, and (iii) a second polymer comprising, as polymerized units, a hydrophobic monomer unit with a polycyclic or polyaromatic terminal unit, attached with a hydrophilic spacer unit, to a backbone group comprising (meth)acrylate units. The present invention further provides a method of producing fine solid particles comprising: (a) feeding agglomerated pigment particles into a grinding mill; (b) feeding crosslinked polymeric nanoparticles ("PNPs") into the grinding mill, wherein the PNPs have a mean diameter in the range of from 1 to 20 nanometers and comprise, as polymerized units ,at least one multi-ethylenically-unsaturated monomer; (c) feeding a second polymer comprising, as polymerized units, a hydrophobic monomer unit with a polycyclic or polyaromatic terminal unit, attached with a hydrophilic spacer unit, to a backbone group comprising (meth)acrylate units; and (d) operating the grinding mill.

Surprisingly, the combination of PNPs with another, non-PNP, polymer in the process of dispersing colorants, results in colorant dispersions and inks made from such dispersions, capable of addressing the problems of currently available materials and methods which are identified above. Preferably the PNPs comprise at least 10% by weight of the combined polymers.

The term "(meth)acrylic" includes both acrylic and methacrylic and the term "(meth)acrylate" includes both acrylate and methacrylate. Likewise, the term "(meth)acrylamide" refers to both acrylamide and methacrylamide. "Alkyl" includes straight chain, branched and cyclic alkyl groups. All ranges defined herein are inclusive and combinable. Unless indicated otherwise, the use of the term "or" herein refers to the inclusive form of "or", e.g., the condition "A or B" is true when at least one of the following is satisfied: A is true; B is true; A and B are both true.

The term "hydrophilic" when referring to a monomer or monomer unit means a monomer which has a solubility in water, at 20-25 °C on a weight % basis (g monomer soluble per 100g water) of at least 6.0% by weight. Examples of ethylenically unsaturated hydrophilic monomers include, but are not limited to, (meth)acrylic acid, (meth)acrylamide, acrylonitrile, 2-hydroxyethyl (meth)acrylate, mono- and multi- ethylenically unsaturated polyethyleneglycol (meth)acrylates, vinyl alcohol, and derivatives thereof that exhibit a solubility in water of at least 6.0% by weight. The solubility of monomers in water is known. For example, data are available in the Merck Index (Eleventh Edition, Merck & Co., Inc. (Rahway, N. J., U.S.A.).

PNPs comprise, as polymerized units, at least one multi-ethylenically-unsaturated monomer. The PNPs are formed by the free radical polymerization of at least one multi-ethylenically-unsaturated monomer. Typically, the PNPs contain at least 1% by weight based on the weight of the PNPs, of at least one polymerized multi-ethylenically-unsaturated monomer. Up to and including 100% polymerized multi-ethylenically-unsaturated monomer, based on the weight of the PNPs, can be effectively used in the PNPs of the present invention. It is preferred that the amount of polymerized multi-ethylenically-unsaturated monomer is from about 1% to about 80% based on the weight of the PNPs, more preferably from about 1 % to about 60% based on the weight of the PNPs, and most preferably from 1% to 25% based on the weight of the PNPs. PNPs and the method of making them are disclosed in European Patent Application publication EP1245644 (US20030055178), which is incorporated herein by reference.

The PNPs typically have an apparent GPC weight average molecular weight in the range of 500 to 1,000,000, preferably in the range of 1,000 to 900,000, more preferably in the range of from 2,000 to 800,000, even more preferably in the range of from 3,000 to 700,000, even further preferably from 4,000 to 600,000, even more further preferably from 5,000 to 500,000, substantially more preferably from 10,000 to 500,000 and most preferably in the range of 15,000 to 100,000. As used herein, "apparent weight average molecular weight" reflects the size of the PNP particles. The GPC elution times of the PNPs thereby provide an indication of an apparent weight average molecular weight measurement, and not necessarily an absolute weight average molecular weight measurement. As used herein, the term "molecular weight", when describing the PNPs, refers to the apparent molecular weight one obtains using standard gel permeation chromatography methods, e.g., using THF solvent at 40C, 3 Plgel Columns (Polymer Labs), 100 Angstrom, 10^3, 10^4 Angstroms, 30 cm long, 7.8 mm ID, 1 mil/min, 100 microliter injection volume, calibrated to narrow polystyrene standards using Polymer Labs CALIBRE™ software.

In the various embodiments of the present invention, unless indicated otherwise, the PNPs have a mean diameter in the range of from 1 to 20 nm, preferably in the range of from 1 to 10 nm, more preferably below 10 nm and even more preferably in the range of from 2 to 8 nm.

In combination with PNPs is a second, non-PNP, polymer comprising hydrophilic and hydrophobic groups. The second polymer comprises, as polymerized units, a hydrophobic component consisting of a polycyclic or polyaromatic terminal structure, attached via a hydrophilic spacer structure, such as polyethylene oxide units, to a backbone group comprising (meth)acrylate units. Preferably at least twenty percent (20%) by weight of the (meth)acrylate units in the backbone group are hydrophilic monomer units.

Colorants include dyes, pigments or combinations thereof, and are preferably organic or inorganic pigments. Once dispersed, colored dispersions of the present invention may be formulated into coatings, such as architectural coatings, industrial coatings or paper coatings, and inks, especially an inkjet ink. Typical inkjet ink formulations include a liquid medium, preferably predominantly water, and more preferably deionized water; a colorant dispersion and optionally a binder component. If utilized, typically the binder is present at a level of from 0.1 to 10 wt%, preferably from 0.5 to 5 wt%, based on the total weight of the ink. Typically the aqueous carrier is present at from 40 to 95 wt%, preferably from 55 to 80 wt%, and more preferably, from 70 to 80 wt% based on the total weight of the ink. Polymeric dispersants are typically used at 0.1 to 5 wt%, based on the total weight of the ink.

Fine solid dispersions such as pigment dispersions in water can be made by mixing pigment, dispersants, water, and optional additives and milling in, for example, a horizontal media mill, a vertical media mill, or an attritor mill, such as a Netzsch brand zeta mill or a Premier brand super mill. The colorant dispersing method for the present invention is not limited, and may be selected from those using a dispersing machine, such as a media mill, pin mill, sand mill, pearl mill, agitator mill, shot mill, or three-roll mill, or a high-pressure homogenizer, such as a microfluidizer, nanomizer or multimizer, or ultrasonic dispersing machine. Other milling techniques known in the art which can be utilized include, for example, ultrasonic milling, milling with a micro-channel or high-shear, high-pressure milling such as for example using a Microfluidizer® from Microfluidics International, Newton MA, U.S.A. The terms "milling" or "grinding mill" are meant to encompass all such techniques and devices.

In some milling applications, milling media are selected from a variety of materials such as steel, ceramic, glass or polymeric beads. Common media include ceramic media such as Yttria stabilized Zirconium oxide, including YTZ® media from Tosoh in Japan, zirconia silicate and zirconium-aluminum oxide. Common media sizes are from 0.1 mm to 3.0 mm in diameter. Such grinding media are typically dense and hard, with densities varying between 5.5 and 7.7 g/ml and with a Mohs hardness between 7 and 9. A material's Mohs' hardness value indicates the materials resistance to scratching. Diamond has a maximum Mohs' hardness of 10 and Talc has a Mohs' hardness of 1.

Hard milling media will introduce heavy metals such as Yttria , Zirconia, Nickel and Iron into the dispersions. To combat heavy metal contamination, some mill chambers are coated with a polyurethane coating that reduces the nickel and iron content from the stainless steel mill chamber and some metal content from the grinding media. Another method of combating heavy metal contamination is to use polymeric beads as the grinding media since such media do not introduce heavy metals and eliminate the need for coating the chamber with polyurethane, thereby enabling the use of the chamber body for heat transfer capacity. Polymeric media is light, with densities typically between 1.1 and 1.6 g/ml.

The present invention combination of polymeric dispersants is preferably used for high loadings and rapid milling rates for colorant particles in the size range of 20 to 200 nanometers. Preferably a pre-mix of the colorant particles and at least one of the polymeric dispersants is prepared prior to milling.

Suitable pigments include, for example, organic pigments such as azo compounds, phthalocyanine pigments, quinacridone pigments, anthraquinone pigments, dioxazine pigments, indigo, carbon black, thioindigo pigments, perynone pigments, perylene pigments, and isoindolene; and inorganic pigments such as titanium dioxide, iron oxide, and metal powders. Pigments may or may not be self-dispersed types of pigments. Typically the amount of colorant dispersion used is less than 10 wt%, preferably from 0.5 to 10 wt%, and more preferably from 0.5 to 7%, based on the total weight of the ink. Preferably, the pigment particle size is from 0.05 to 5 microns, more preferably not more than one micron and most preferably not more than 0.3 microns.

The inkjet ink can also include, for example, humectants, dispersants, penetrants, chelating agents, buffers, biocides, fungicides, bactericides, surfactants, anti-curling agents, anti-bleed agents and surface tension modifiers. Useful humectants include ethylene glycol, 1,3 propanediol, 1,4 butanediol, 1,4 cyclohexanedimethanol, 1,5 pentanediol, 1,2-hexanediol, 1,6 hexanediol, 1,8 octanediol, 1,2 propanediol, 1,2 butanediol, 1,3 butanediol, 2,3 butanediol, diethylene glycol, triethylene glycol, tetraethylene glycol, polyethylene glycol with average molecular weight of 200, 300, 400, 600, 900, 1000, 1500 and 2000, dipropylene glycol, polypropylene glycol with average molecular weight of 425, 725, 1000, and 2000, 2-pyrrolidone, 1-methyl-2-pyrrolidone, 1-methyl-2-piperidone, N-ethylacetamide, N-methylpropionamide, N-acetyl ethanolamine, N-methylacetamide, formamide, 3-amino-1, 2-propanediol, 2,2-thiodiethanol, 3,3-thiodipropanol, tetramethylene sulfone, butadiene sulfone, ethylene carbonate, butyrolacetone, tetrahydrofurfuryl alcohol, glycerol, 1,2,4-butenetriol, trimethylpropane, sorbital, pantothenol, Liponic EG-1. Preferred humectants are polyethylene glycol with average molecular weight of 400 to 1000, 2-pyrrolidone 2,2 thiodiethanol, and 1,5 pentanediol. The amount of humectant used can range from 1 to 30 wt%, preferably from 5 to 15 wt%, based on the total weight of the ink. Preferred penetrants are 1,2 C₁-C₄ alkyl diols, such as 1,2 hexanediol; N-propanol; isopropanol; and hexyl carbitol. The amount of penetrant used can range from 0.1 to 10 wt%, based on the total weight of the ink.

The inkjet ink can be prepared by any method known in the art such as, for example, by mixing, stirring or agitating the ingredients together. The inkjet ink can additionally include such adjuvants as chelating agents, buffers, biocides, fungicides, bactericides, surfactants, anti-curling agents, anti-bleed agents, and surface tension modifies, as desired. Inkjet inks formulated with colorant dispersions of the present invention, possess high optical density and gloss on plain and glossy photo paper respectively.

The inkjet ink can be applied to a substrate such as paper, vinyl, and the like using thermal or piezoelectric inkjet ink printers such as, for example, Lexmark 7000, Lexmark 5700, Lexmark Z32, Lexmark Z51, Lexmark Z-65, Lexmark 2050 printers, Epson Stylus 3000, C-82, C-84, Hewlett-Packard DeskJet 550, 570, 694C, 698, 894, 895Ci, and Canon 750. The ink can be allowed to dry at ambient temperature or heated to dry at a higher temperature.

The following examples are illustrative of the invention. In the Examples, P/D means the weight ratio of solid pigment to polymer dispersant. The Eiger horizontal media mill refers to the Eiger "Mini" Mk II Mill, available from Eiger Machinery, Inc., located in Grayslake, Illinois, USA. The Dispermat refers to the Dispermat PE laboratory disperser, available from VMA Getzmann GmbH, located in Reichshof, Germany. Kordex LX5000 is a commercially available biocide available from Rohm and Haas Company, located in Philadelphia, Pennsylvania, USA. Surfynol 465 is a commercially available surfactant available from Air Products, Inc., located in Allentown, Pennsylvania, USA. BYK 022 is a commercially available defomer available from BYK-Chemie USA, located in Wallingford, Connecticut, USA. The X-Rite densitometer refers to the 500 series spectrodensitometer, available from X-Rite, Inc., located in Grandville, Michigan, USA.

### EXAMPLE 1: Preparation of SEM-25 Polymer

A sample of a non-PNP polymeric dispersant of the general composition Sipomer SEM 25 (SEM 25), Acrylic Acid (AA), Methacrylic Acid (MAA) was prepared as described in this example. Sipomer SEM 25 (chemical name tristyrylphenol polyethoxy methacrylate) is a monomer available from Rhodia, Inc. in Cranbury, NJ, USA. A reaction vessel containing 1,231 g of isopropanol is heated to 79°C. A mixture of 9.6g of t-butyl peroxypivalate (75% active) dissolved in 9 g of isopropanol is fed to the reaction vessel over 125 minutes. Simultaneously, a mixture containing 225g of Sipomer SEM 25 (60% active; 20% MAA; 20% water), 71.1 g of AA dissolved in 60g of isopropanol is fed to the reaction vessel over 120 minutes. After completion of both feeds the reaction vessel is held at 79°C for 30 minutes. After completion of the 30 minute hold a mixture of 4.8g of t-butyl peroxypivalate dissolved in 12 g of isopropanol is added to the reaction vessel over 1 minute. The reaction vessel is then held for 30 minutes. After completion of the 30 minute hold a second mixture of 4.8g of t-butyl peroxypivalate dissolved in 12 g of isopropanol is added to the reaction vessel over 1 minute. The reaction vessel is then held for 30 minutes. After completion of the 30 minute hold a third mixture of 4.8g of t-butyl peroxypivalate dissolved in 12 g of isopropanol is added to the reaction vessel over 1 minute. The reaction vessel is then held for 150 minutes at 79°C. After this final hold the reaction vessel is then cooled to 40°C and the contents of the reaction vessel is neutralized with a mixture of 146 g of 45% by weight potassium hydroxide pre-diluted in 1000 g of di-ionized water. The isopropanol is then removed from the reaction vessel by vacuum distillation. The final distilled aqueous polymer dispersant has the following properties: 14.3% solids, pH 8.5, Brookfield Viscosity 2,410 cps.

### EXAMPLE 2: Preparation of SEM-25 Polymer, lower AA

A sample of a dispersant of the general composition Sipomer SEM 25 (SEM 25), Acrylic Acid (AA), Methacrylic Acid (MAA) was prepared as described in this example. A reaction vessel containing 1,231g of isopropanol is heated to 79°C. A mixture of 9.6g of t-butyl peroxypivalate (75% active) dissolved in 9 g of isopropanol is fed to the reaction vessel over 125 minutes. Simultaneously, a mixture containing 268g of Sipomer SEM 25 (60% active; 20% MAA; 20% water), 2.5 g of AA plus 34.3 g of MAA dissolved in 60g of isopropanol is fed to the reaction vessel over 120 minutes. After completion of both feeds the reaction vessel is held at 79°C for 30 minutes. After completion of the 30 minute hold a mixture of 4.8g of t-butyl peroxypivalate dissolved in 12 g of isopropanol is added to the reaction vessel over 1 minute. The reaction vessel is then held for 30 minutes. After completion of the 30 minute hold a second mixture of 4.8g of t-butyl peroxypivalate dissolved in 12 g of isopropanol is added to the reaction vessel over 1 minute. The reaction vessel is then held for 30 minutes. After completion of the 30 minute hold a third mixture of 4.8g of t-butyl peroxypivalate dissolved in 12 g of isopropanol is added to the reaction vessel over 1 minute. The reaction vessel is then held for 150 minutes at 79°C. After this final hold the reaction vessel is then cooled to 40°C and the contents of the reaction vessel is neutralized with a mixture of 146 g of 45% by weight potassium hydroxide pre-diluted in 1000 g of di-ionized water. The isopropanol is then removed from the reaction vessel by vacuum distillation. The final distilled aqueous polymer dispersant has the following properties: 10.3% solids, pH 7.24, viscosity 3,612 cps.

### EXAMPLE 3: Preparation of SEM-16 Polymer

A sample of a dispersant of the general composition "SEM 16", Acrylic Acid (AA), Methacrylic Acid (MAA) was prepared as described in this example. "SEM 16" is also an ethoxylated tristyrylphenol methacrylate monomer and was provided by Rhodia, Inc. in Cranbury, NJ, USA under the product designation DV-7486. It differs from Sipomer SEM 25 in the number of moles of ethoxylated units - "SEM 16" has 16 moles and Sipomer SEM 25 has 25 moles. A reaction vessel containing 1,231g of isopropanol is heated to 79°C. A mixture of 9.6g of t-butyl peroxypivalate (75% active) dissolved in 9 g of isopropanol is fed to the reaction vessel over 125 minutes. Simultaneously, a mixture containing 167.0 g of "SEM 16" (60% active; 20% MAA; 20% water), 10.5 g of MAA, 69.14 g of AA dissolved in 60g of isopropanol is fed to the reaction vessel over 120 minutes. After completion of both feeds the reaction vessel is held at 79°C for 30 minutes. After completion of the 30 minute hold a mixture of 4.8g of t-butyl peroxypivalate dissolved in 12 g of isopropanol is added to the reaction vessel over 1 minute. The reaction vessel is then held for 30 minutes. After completion of the 30 minute hold a second mixture of 4.8g of t-butyl peroxypivalate dissolved in 12 g of isopropanol is added to the reaction vessel over 1 minute. The reaction vessel is then held for 30 minutes. After completion of the 30 minute hold a third mixture of 4.8g of t-butyl peroxypivalate dissolved in 12 g of isopropanol is added to the reaction vessel over 1 minute. The reaction vessel is then held for 150 minutes at 79°C. After this final hold the reaction vessel is then cooled to 40°C and the contents of the reaction vessel is neutralized with a mixture of 142 g of 45% by weight potassium hydroxide pre-diluted in 1000 g of di-ionized water. The isopropanol is then removed from the reaction vessel by vacuum distillation. The final distilled aqueous polymer dispersant has the following properties: 18.5% solids, pH 7.3, Brookfield Viscosity 260 cps.

### EXAMPLE 4: Preparation of PNP

A sample of a dispersant of the general composition Benzyl Methacrylate (BzMA), Methyl Methacrylate (MMA), Acrylic Acid (AA) and Trimethylolpropanetriacrylate (TMPTA) was prepared as follows. A reaction vessel containing 2,462g of isopropanol is heated to 79°C. A mixture of 19.2g of t-butyl peroxypivalate (75% active) dissolved in 18 g of isopropanol is fed to the reaction vessel over 125 minutes. Simultaneously, a mixture containing 201 g of BzMA, 150.8 g of MMA, 100.5g of AA and 50.2 g of TMPTA dissolved in 120g of isopropanol is fed to the reaction vessel over 120 mins. After completion of both feeds the reaction vessel is held at 79°C for 30 minutes. After completion of the 30 minute hold a mixture of 9.6g of t-amyl peroxypivalate dissolved in 24 g of isopropanol is added to the reaction vessel over 1 minute. The reaction vessel is then held for 30 minutes. After completion of the 30 minute hold a second mixture of 9.6g of t-amyl peroxypivalate dissolved in 24 g of isopropanol is added to the reaction vessel over 1 minute. The reaction vessel is then held for 30 minutes. After completion of the 30 minute hold a third mixture of 9.6g of t-amyl peroxypivalate dissolved in 24 g of isopropanol is added to the reaction vessel over 1 minute. The reaction vessel is then held for 150 minutes at 79°C. After this final hold the reaction vessel is then cooled to 40°C and the contents of the reaction vessel is neutralized with a mixture of 148 g of 45% by weight potassium hydroxide pre-diluted in 2000 g of di-ionized water. The isopropanol is then removed from the reaction vessel by vacuum distillation. The final distilled aqueous polymer dispersant has the following properties: 24.4% solids, pH 8.5, Brookfield Viscosity < 10 cps. The PNP particles have a mean diameter of 19.3 nanometers.

Particle size is determined using dynamic light scattering (DLS) with a time based auto-correlator and a 532 nanometer wavelength laser. The sample is prepared at a nominal one weight percent solids solution in water at pH 8.5 and is clarified by filtration prior to analysis by passage of the dilute solution through a 0.1 micron pore size membrane filter. The DLS relaxation times of the observed autocorrelation functions are plotted versus the wave-vector squared over multiple observation angles from 145 degrees to 50 degrees scattering angle and the slope of this straight line is then used to determine the mutual diffusion coefficient of the polymer. The observed mutual diffusion coefficient is converted into a hydrodynamic diameter by assuming the polymer is spherical and using the Stokes-Einstein equation for the diffusion of spheres.

### EXAMPLE 5: Preparation of Cyan Dispersion (w/ Example 1 dispersant only)

150 g of Phthalocyanine Blue 15:3 (Aztech) pigment was added to 126.1 g of an aqueous solution of polymer made according to Example 1. The mixture was dispersed using a high speed Dispermat. This premix was fed in a 250 ml Eiger horizontal media mill charged with 0.6 - 0.9 mm polystyrene grinding media. The mixture was milled at 32 - 35 % solids in recirculation mode with periodic addition of 42.2 g polymer. A pigment particle size of 104 nm was produced in 10 hours with a final P/D of 7. The dispersion was diluted to 20 % solids and filtered through a 0.45 micron capsule filter. The pigment dispersion of this invention was found to be stable to the presence of organic co-solvents and to thermal aging (65 °C, 30 days).

### EXAMPLE 6: Preparation of Yellow Dispersion (w/ Example 1 dispersant only)

151 g of Pigment Yellow 747 (Sun) was added to 127.0 g of an aqueous solution of polymer made according to Example 1. The mixture was dispersed using a high speed Dispermat. This premix was fed in a 250 ml Eiger horizontal media mill charged with 0.6 - 0.9 mm polystyrene grinding media. The mixture was milled at 33 - 35 % solids in recirculation mode with periodic addition of 43.3 g polymer. A pigment particle size of 113 nm was produced in 10 hours with a final P/D of 7. The dispersion was diluted to 20 % solids and filtered through a 0.45 micron capsule filter. The pigment dispersion of this invention was stable to thermal aging and to the presence of organic co-solvents (65 °C, 30 days).

### EXAMPLE 7: Preparation of Magenta Dispersion (w/ Example 1 dispersant only)

150 g of Pigment Red 122 (Sun) was added to an aqueous solution of polymer made according to Example 1. The mixture was dispersed using a high speed Dispermat. This premix was fed in a 250 ml Eiger horizontal media mill charged with 0.8 mm Yttria treated Zirconia (YTZ) grinding media. The mixture was milled in recirculation mode for about 20 hours producing a pigment particle size of 153 nm with a final P/D of 5. The dispersion was diluted to 20 % solids and filtered through a 0.45 micron capsule filter.

### EXAMPLE 8: Preparation of Cyan Dispersion (w/ Example 3 dispersant only)

The ingredients identified below were dispersed in a 250mL Eiger Mill with 0.8mm YTZ ceramic media loaded to 80% to 123nm mean volume particle size measured on Nanotrac 150.

| Ingredient | Grams |
|---|---|
| Polymer sample made according to Example 3 | 155.9 |
| KOH 10% | 1.0. |
| Kordek™ LX5000 (50%) | 0.4 |
| Cyan PB15:3 (Lansco) | 150.0 |
| Water | 374.0 |

### EXAMPLE 9: Preparation of Magenta Dispersion (w/ Example 4 PNP only)

The ingredients identified below were dispersed in a 250mL Eiger Mill with 0.8 YTZ ceramic media loaded to 80% to 169nm mean volume particle size measured on Nanotrac 150. Dispersion gelled 24 hours after removal from Eiger Mill.

| Ingredient | Grams |
|---|---|
| Water | 55.6 |
| Kordek™ LX5000 | 0.4 |
| Example 4 | 182.4 |
| KOH 10% | 2.8 |
| Magenta PR122 (Sun) | 139.1 |
| Water | 315.2 |

### EXAMPLE 10: Preparation of Cyan Dispersion (w/ Example 2 & Example 4 dispersants)

The ingredients identified below were dispersed in a 250mL Eiger Mill with 0.8mm YTZ ceramic media loaded to 80% to 99nm mean volume particle size measured on Nanotrac 150.

| Ingredient | grams |
|---|---|
| Example 2 | 243.8 |
| Example 4 | 98.6 |
| Surfynol™ 465 | 10.0 |
| KOH 10% | 2.5 |
| Kordek™ LX5000 (50%) | 0.5 |
| Cyan PB15:3 (Lansco) | 130.0 |
| Byk™ 022 | 1.0 |
| Water | 383.6 |

### EXAMPLE 11: Preparation of Yellow Dispersion (w/ Example 2 & Example 4 dispersants)

The ingredients identified below were dispersed in a 250mL Eiger Mill with 0.8 YTZ ceramic media loaded to 80% to 110nm mean volume particle size measured on Nanotrac 150.

| Ingredient | grams |
|---|---|
| Example 2 | 243.8 |
| Example 4 | 98.6 |
| Surfynol™ 465 | 10.0 |
| Byk™ 022 | 2.0 |
| KOH 10% | 2.4 |
| Kordek™ LX5000 (50%) | 0.5 |
| Yellow 74 (Sun) | 130.0 |
| Water | 379.7 |

### EXAMPLE 12: Preparation of Magenta Dispersion (w/ Example 2 & Example 4 dispersants)

The ingredients identified below were dispersed in a 250mL Eiger Mill with 0.8 YTZ ceramic media loaded to 80% to 120nm mean volume particle size measured on Nanotrac 150.

| Ingredient | Grams |
|---|---|
| Example 2 | 243.8 |
| Example 4 | 98.6 |
| KOH 10% | 2.5 |
| Kordek™ LX5000 (50%) | 0.5 |
| Magenta PR122 (Clariant) | 130.0 |
| Water | 391.6 |

### Example 13: Stability Results

Stability of the colorant dispersions in Examples 5-12 were assessed by preparing pigment dispersions at 5% pigment solids with 10% diethylene glycol butyl ether and the balance DI water. Samples were prepared in low form glass vials with Teflon seals. No additional pH adjustment was made. Colorant was added with agitation by magnetic stirrer, to previously measured out liquids, mixed for 1 minute, capped and then caps sealed with vinyl tape. Samples were stored in a laboratory oven at 50-60°C in aluminum trays. Particle size distributions were measured by Nanotrac 150 before and after heat ageing. Mean volume particle size, standard deviation, d95, and maximum particle size were recorded for stability determinations. In many cases particle size growth was found after 24 hours, for example 100nm mean volume initial to 400nm after 1 day at 50-60°C. Measurements were continued weekly up to 8 weeks for stable samples. Samples were classified as stable if they showed less than 5% growth in particle size after 8 weeks.
None of the single dispersant compositions tested were found to pass stability for all pigments. The results are shown in Table 1 below.

**Table 1: Heat Aged Butyl Carbitol Stability**

| **Dispersion** | **Pigment Color** | **Polymeric Dispersant** | **50-60°C heat age stability** |
|---|---|---|---|
| **Example 5** | Cyan | Ex. 1 Polymer, non-PNP | stable |
| **Example 6** | Yellow | Ex. 1 Polymer, non-PNP | stable |
| **Example 7** | Magenta | Ex. 1 Polymer, non-PNP | unstable |
| **Example 8** | Cyan | Ex. 3 Polymer, non-PNP | unstable |
| **Example 9** | Magenta | Ex. 4 Polymer, PNP | unstable |
| **Example 10** | Cyan | Ex. 2 Polymer, non-PNP & Ex. 4 Polymer, PNP | stable |
| **Example 11** | Yellow | Ex. 2 Polymer, non-PNP & Ex. 4 Polymer, PNP | stable |
| **Example 12** | Magenta | Ex. 2 Polymer, non-PNP & Ex. 4 Polymer, PNP | stable |

Only the inventive binary dispersant of this invention was found to provide heat age stability in the presence of 10% diethylene glycol butyl ether for all pigments evaluated.

### Example 14: Inkjet Ink Formulations

Inkjet inks were prepared from colorant dispersion Examples 5-8 and 10-12 with one of the following formulations for print testing as shown in Table 2 below.

**Table 2**

| **Ink formulation** | **Ink Formula 1** | **Ink Formula 2** |
|---|---|---|
| Ethylene glycol | 7.6 | 7 |
| 2 pyrrolidinone | 3.4 | 3 |
| triethyleneglycol butyl ether | 7.5 | 4 |
| Glycerol | 16.3 | 7 |
| Surfynol™ 465 | 1.1 | 1.25 |
| Water | 34.9 | 48.6 |
| Colorant Dispersion from Examples colorant to pigment solids =5% (dispersion at 20% TS, 17% pigment) | 29.2 | 29.15 |
| | 100% | 100% |

Solvents and water were weighed out first and then colorant added with agitation by magnetic stirrer. The inks were filtered through 1 micron glass syringe filters and degassed under house vacuum in a desiccator. Ink Jet Warehouse C82 cartridges were filled with the experimental inks and further degassed under house vacuum for 2 hours. The cartridges were installed in an Epson C82 printer and used to print test patterns on a selection of papers.

Optical Density (OD) results were measured with an X-Rite hand held densitometer. Boise Aspen 054901 paper was found to be representative of the plain papers and OD results on Aspen 054901 are summarized in Table 3 below. Gloss results at 20 degrees were measured on Epson Photo Gloss Paper S041286 and are summarized in Table 3 below.

**Table 3**

| **Colorant Dispersion** | **Ink Formula** | **Cyan OD** | **Cyan 20° gloss** | **Yellow OD** | **Yellow 20° gloss** | **Magenta OD** | **Magenta 20° gloss** |
|---|---|---|---|---|---|---|---|
| Example 5 | 1 | 1.06 | 34.7 | | | | |
| Example 6 | 1 | | | 0.86 | 56.5 | | |
| Example 7 | 1 | | | | | 0.88 | 75.3 |
| Example 8 | 2 | 1.06 | 27.1 | | | | |
| Example 10 | 1 | 1.11 | 44.9 | | | | |
| Example 11 | 1 | | | 0.90 | 97.6 | | |
| Example 12 | 1 | | | | | 0.92 | 62.6 |

## Claims

1. A dispersion of colored particles comprising:
one or more pigments;
crosslinked polymeric nanoparticles ("PNPs") having a mean diameter in the range of from 1 to 20 nanometers, said PNPs comprising as polymerized units at least one multi-ethylenically-unsaturated monomer; and
a second polymer comprising, as polymerized units, a hydrophobic monomer unit with a polycyclic or polyaromatic terminal unit, attached with a hydrophilic spacer unit, to a backbone group comprising (meth)acrylate units.

2. The colored particles of Claim 1 wherein the PNP comprises, as polymerized units, benzyl methacrylate, methyl methacrylate, acrylic acid and trimethylolpropanetriacrylate.

3. The colored particles of Claim 1 wherein the second polymer comprises, as polymerized units, tristyrylphenol polyethoxy methacrylate, acrylic acid and methacrylic acid.

4. The colored particles of Claim 1 wherein said (meth)acrylate units of the backbone group of the second polymer comprises at least twenty percent (20%) by weight hydrophilic monomers.

5. An inkjet ink comprising:
a liquid medium and
a dispersion of colored particles comprising (i) one or more pigments, (ii) crosslinked polymeric nanoparticles ("PNPs") having a mean diameter in the range of from 1 to 20 nanometers, said PNPs comprising as polymerized units at least one multi-ethylenically-unsaturated monomer, and (iii) a second polymer comprising, as polymerized units, a hydrophobic monomer unit with a polycyclic or polyaromatic terminal unit, attached with a hydrophilic spacer unit, to a backbone group comprising (meth)acrylate units.

6. The inkjet ink of Claim 5 wherein said (meth)acrylate units of the backbone group of the second polymer comprises at least twenty percent (20%) by weight hydrophilic monomers.

7. An ink set comprising cyan, magenta and yellow whereby at least one of the inks of the ink set is an inkjet ink of Claim 5.

8. A method of producing fine solid particles comprising:
feeding agglomerated pigment particles into a grinding mill;
feeding crosslinked polymeric nanoparticles ("PNPs") into the grinding mill, wherein the PNPs have a mean diameter in the range of from 1 to 20 nanometers and comprise, as polymerized units ,at least one multi-ethylenically-unsaturated monomer;
feeding a second polymer comprising, as polymerized units, a hydrophobic monomer unit with a polycyclic or polyaromatic terminal unit, attached with a hydrophilic spacer unit, to a backbone group comprising (meth)acrylate units; and
operating the grinding mill.

9. The method of Claim 8 wherein the pigment particles and at least one of (a) the PNPs or (b) the second polymer, are mixed prior to feeding into the grinding mill.

10. The method of Claim 8 wherein grinding media is incorporated into the grinding mill.
